**Europäisches Patentamt**

**European Patent Office**

**Office européen des brevets**

(19)

(11) Numéro de publication: **0 178 238**
**A1**

# (12) DEMANDE DE BREVET EUROPEEN

(21) Numéro de dépôt: 85430035.7

(22) Date de dépôt: 03.10.85

(51) Int. Cl.⁴: **A61C 5/12**

(30) Priorité: 04.10.84 FR 8415433

(43) Date de publication de la demande:
16.04.86 Bulletin 86/16

(84) Etats contractants désignés:
AT BE CH DE GB IT LI LU NL SE

(71) Demandeur: **Levy, Guy**
49, rue Croix de Regnier
F-13004 Marseille(FR)

(72) Inventeur: **Levy, Guy**
49, rue Croix de Regnier
F-13004 Marseille(FR)

(74) Mandataire: **Marek, Pierre**
28 & 32 rue de la Loge
F-13002 Marseille(FR)

(54) Crampon de maintien de la feuille souple utilisée pour l'isolement des dents, lors de certaines interventions dentaires.

(57) Crampon de maintien de la feuille souple utilisée pour l'isolement des dents, lors de certaines interventions dentaires, comprenant deux mors (1) et un ressort (2) en forme de pont réunissant lesdits mors, caractérisé en ce qu'il est exécuté en une matière plastique dotée d'une capacité de déformation élastique et perméable aux rayons X et, par exemple, de manière très avantageuse, en un polycarbonate.

Fig.1

EP 0 178 238 A1

La présente invention concerne un crampon de maintien de la feuille souple utilisée pour l'isolement des dents, lors de certaines interventions dentaires. La mise en place d'un champ opératoire isolant la dent du milieu buccal est une pratique unanimement conseillée.

La méthode la plus courante consiste à utiliser une digue formée par une feuille souple communément constituée par une feuille de caoutchouc. Celle-ci est perforée à un très petit diamètre (par exemple de l'ordre de 3 millimètres) puis distendue pour entourer la dent à isoler sur laquelle elle sera placée. Afin d'éviter que cette feuille de caoutchouc ne puisse se dégager de la dent sur laquelle elle est installée, en cours d'intervention, elle est maintenue en place par un crampon fixé au collet de ladite dent. Les crampons utilisés pour remplir cette fonction comportent : - deux mors échancrés dont les extrémités sont destinées à s'engager dans les espaces interdentaires et dotés ou non d'ailettes ; et un ressort supérieur réunissant les mors lingual et vestibulaire et permettant un serrage énergique desdits mors sur le collet de la dent sur lequel le crampon est placé. Ces crampons sont actuellement exécutés en métal inoxydable. Ils présentent, de ce fait, un certain nombre d'inconvénients importants.

Ils sont imperméables aux rayons X et, lors de l'exécution de radiographies, ils masquent, en grande partie, l'anatomie de la dent et les instruments introduits dans les canaux, ce qui gêne les praticiens et les oblige à réaliser un grand nombre de clichés orientés suivant des angulations différentes pour éviter la superposition des mors, des ailettes, du ressort et de la partie de la dent à radiographier. Ils sont onéreux, car ils nécessitent, pour leur réemploi, une exécution en un métal inoxydable supportant une stérilisation à haute température.

Compte tenu du fait qu'ils sont généralement réalisés en acier à ressort trempé, ils ne sont pas ou sont très difficilement ajustables à l'anatomie particulière du collet des différentes sortes de dents, de sorte que le praticien doit posséder, pour chaque sorte de dent, un jeu plus ou moins important de crampons allant du plus petit diamètre au plus large.

Leur ressort constitué par une bande de métal courbe a une section plate ou sensiblement plate et des bords opposés relativement peu épais dont le contact avec le bord de la perforation pratiquée dans la feuille de caoutchouc constituant la digue peut engendrer un effet coupant susceptible de provoquer une amorce de déchirure de ladite feuille.

La présente invention a pour objet un nouveau crampon dentaire permettant de supprimer ces inconvénients.

Ce crampon est principalement remarquable par le fait qu'il est exécuté dans une matière plastique dotée d'une capacité de déformation élastique et perméable aux rayons X.

Le crampon dentaire en matière plastique selon l'invention procure plusieurs avantages importants. Il permet d'établir des clichés radiographiques nets et complets de l'anatomie des dents et de la position des instruments introduits dans les canaux, ce qui autorise une réduction du nombre de clichés nécessaires à l'exécution de certaines interventions. Il facilite également la réalisation de ces clichés. Il peut être exécuté, de manière économique, par un procédé de moulage, ce qui permet de le jeter après emploi, en supprimant ainsi la nécessité d'une stérilisation à haute température après usage. Leurs mors peuvent être aisément ajustés, par meulage, à l'anatomie particulière du collet de chaque sorte de dents, ce qui supprime la nécessité, pour le praticien, de disposer de multiples crampons de caractéristiques différentes pour chaque sorte de dents. En outre, les mors des crampons peuvent être exécutés avec des bords droits de façon à permettre au praticien de réaliser lui-même facilement, par meulage, des échancrures parfaitement adaptées au galbe particulier du collet de la dent sur laquelle le crampon doit être placé. Le ressort qui réunit les mors peut être moulé avec une section circulaire ou arrondie dont le contact ne peut avoir aucun effet coupant sur le bord de la perforation pratiquée dans la feuille souple constituant la digue.

Les buts, caractéristiques et avantages susmentionnés, et d'autres encore, ressortiront mieux de la description qui suit et des dessins annexés dans lesquels :

La figure 1 est une vue en plan d'un crampon dentaire en matière plastique selon l'invention.

La figure 2 est une vue de côté de ce crampon.

La figure 3 est une vue de côté et en coupe selon la ligne 3 - 3 de la figure 1.

La figure 4 est une vue en plan d'une variante d'exécution de ce crampon suivant laquelle ses mors sont dotés d'un bord droit ; le tracé en pointillé illustrant les échancrures susceptibles d'être exécutées par le praticien pour ajuster ledit crampon sur le collet d'une dent.

On se réfère audit dessin pour décrire des exemples d'exécution avantageux, quoique nullement limitatifs, du crampon dentaire en matière plastique selon l'invention.

Ce crampon comprend, de façon connue en soi, deux mors échancrés 1 dont les extrémités 1a sont destinées à s'engager dans les espaces interdentaires, et un ressort supérieur 2 en forme de pont réunissant lesdits mors. Les mors 1 sont pourvus d'une perforation 1b grâce à laquelle ils peuvent être écartés au moyen d'une pince spéciale, à l'encontre de l'action permanente de rapprochement exercée par le ressort 2, cette pince permettant de poser commodément le crampon sur la dent et de le déposer tout aussi facilement. Les mors 1 peuvent comporter des ailettes latérales 1c recourbées, destinées à coiffer la gencive.

Selon l'invention, les crampons dentaires sont exécutés en une matière plastique apte à supporter des déformations élastiques importantes et perméable aux rayons X. Leur réalisation peut donc être envisagée en différentes matières plastiques dotée des caractéristiques ci-dessus, telles que polycarbonates, par exemple.

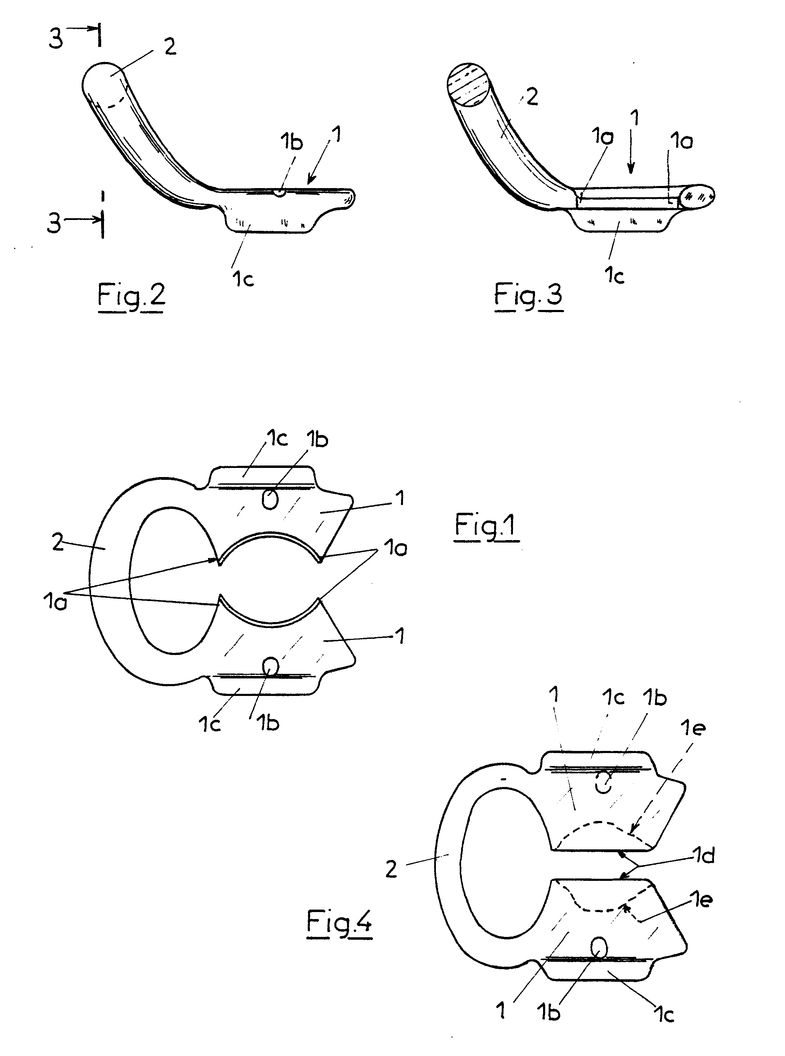

Selon une autre caractéristique de l'invention, le ressort 2 qui réunit les deux mors 1 a une section circulaire ou arrondie (figure 3).

Grâce à leur exécution en matière plastique et, plus précisément, de manière avantageuse, en un polycarbonate, les crampons peuvent aussi être réalisés avec des mors 1 dotés d'un bord interne 1d droit (figure 4). Le praticien a ainsi la possibilité d'exécuter lui-même, à l'aide d'une petite meule qui est d'un emploi courant en dentisterie, les échancrures 1e des mors 1, de façon qu'elles soient parfaitement ajustées au galbe particulier du collet de la dent sur laquelle le crampon doit être installé.

**Revendications**

1. - Crampon de maintien de la feuille souple utilisée pour l'isolement des dents, lors de certaines interventions dentaires, comprenant deux mors (1) et un ressort (2) en forme de pont réunissant lesdits mors, caractérisé en ce qu'il est exécuté en une matière plastique dotée d'une capacité de déformation élastique et perméable aux rayons X.

2. - Crampon suivant la revendication 1, caractérisé en ce qu'il est exécuté en polycarbonate.

3. - Crampon selon l'une des revendications 1 ou 2, caractérisé en ce que le ressort (2) en forme de pont qui réunit les deux mors (1) a une section circulaire ou arrondie.

4. - Crampon suivant l'une des revendications 1 ou 2, caractérisé en ce que ses mors (1) ont un bord interne (1d) droit, de façon que ce bord puisse être échancré, en fonction des besoins, par le praticien.

Fig.2

Fig.3

Fig.1

Fig.4

Office européen
des brevets

**RAPPORT DE RECHERCHE EUROPEENNE**

Numero de la demande

EP 85 43 0035

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 857 181 (RAPPAPORT)<br>* Colonne 2, lignes 66-68; figures * | 1,3 | A 61 C 5/12 |
| | --- | | |
| A | US-A-4 265 623 (SOELBERG)<br>* Abrégé; figures * | 1 | |
| | ----- | | |

**DOMAINES TECHNIQUES RECHERCHES (Int. Cl.4)**

A 61 C

Le présent rapport de recherche a été établi pour toutes les revendications

| Lieu de la recherche | Date d'achèvement de la recherche | Examinateur |
|---|---|---|
| LA HAYE | 10-01-1986 | VANRUNXT J.M.A. |